# EUROPEAN PATENT APPLICATION

(11) **EP 1 367 749 A1**
(43) Date of publication of application: **03.12.2003**
(21) Application number: 02253794.8
(22) Date of filing: 30.05.2002
(51) Int. Cl.: H04J 3/14, H04J 3/16

(54) **Apparatus for testing communications in a network which carries data frames**

(71) Applicant: Agilent Technologies, Inc. - a Delaware corporation -, Palo Alto, CA 94303-0870 (US)
(72) Inventor: Elliot, James Holmes, Edinburgh, EH10 4SW (GB); Curran-Gray, Martin, Dunfermline, Fife KY12 0QT (GB); Old, Gordon, Edinburgh, Lothian EG11 1RX (GB); McCall, Kevin Douglas, Livingston, West Lothian EH54 6US (GB)
(74) Representative: Coker, David Graeme

(57) **Abstract**

A tester (22) for testing communication links in a network which carries data frames between communications ports having respective station addresses includes a plurality of communications ports (1,2,3,4) and a test data generator (32) for generating test data frames to be transmitted via the communications ports. A store (30) holds a plurality of sets of predefined station addresses to be associated with the communications ports. A selector (36) receives an indication of user selection of one of a plurality of test modes of the tester, and selects in accordance with that indication a respective one of the sets of predefined station addresses for association with the communications ports. The selector may also receive an indication of user selection of one of several test modes, and select a respective mode of operation of the communications ports and of the test data generator. In one mode of operation the source and destination station addresses contained in a received data frame are exchanged, and the modified data frame with the exchanged addresses is transmitted back into the network. The test data generator can include a source identifier for determining identity of a tester which transmitted the received test data frames and identity of a communications port via which the test data frames were transmitted; in particular the test data generator may be operative to include within each test data frame it generates an indication of the identity of the communications port from which the frame is to be transmitted, distinct from the station address of that port.

## Description

### Technical Field

This invention relates to methods and apparatus for testing communication in a network, for example Ethernet tributary data streams which are merged for transmission over SONET or SDH (Synchronous Digital Hierarchy) networks.

### Background Art

Recent years have seen a continuing increase world-wide in the volume of data-related (as distinct from voice-related) telecommunications traffic traversing communications networks. Various approaches are available to accommodate this expanding demand for communications bandwidth. One is to build entirely new networks designed specifically to handle large volumes of data. However, this is not a good economic solution for operators with existing large installed networks which must continue to operated to maximise revenue. Another approach is to install a new packet data network (e.g. using Internet Protocol - IP - or Ethernet or a combination of them), to replace the existing high-capacity SONET/SDH systems used for transmission of voice traffic. To ensure continued service for voice traffic this requires installation of the packet network in relatively large sections which can then be substituted for sections of the SONET/SDH network, so a large initial capital outlay is required.

A third option is to use existing SONET/SDH networks to carry payload comprising packet data, collected and distributed for example via tributary data streams implemented using Ethernet technology. This involves a smaller capital outlay, continues to generate (or even increase) revenue from existing network installations, and does not affect continuity of service for existing customers whose traffic is carried over the SONET/SDH network.

However, installation, testing and maintenance of such composite systems pose new challenges. Typically the staff involved will be those previously engaged in installing and maintaining the SONET/SDH transmission network, and they will have little or no experience of the rather different operating characteristics of packet networks such as Ethernet.

It is an object of this invention to provide methods and apparatus which facilitate the testing of packet networks which are used in conjunction with other kinds of network technology, such as SONET/SDH.

### Disclosure of Invention

According to one aspect of this invention there is provided a tester for testing communication in a network which carries data frames between communications ports having respective addresses, comprising:
a plurality of communications ports;
a test data generator for generating test data frames to be transmitted via the communications ports;
a store for storing a plurality of sets of predefined addresses to be associated with the communications ports; and
a selector for receiving an indication of user selection of one of a plurality of test modes of the tester, and for selecting in accordance with that indication a respective one of the sets of predefined addresses for association with the communications ports.

According to another aspect of this invention there is provided a tester for testing communication in a network which carries data frames between communications ports having respective addresses, each frame containing an indication of the addresses of the source and the intended destination of the frame, comprising:
at least one communications port;
a receiver for receiving a data frame arriving at the communications port;
circuitry for exchanging the source and destination addresses contained in the received data frame; and
a transmitter for transmitting the data frame with the exchanged addresses into the network.

According to a further aspect of this invention there is provided a tester for testing communication in a network which carries data frames between communications ports having respective addresses, comprising:
a receiver for receiving test data frames transmitted through a network; and
a source identifier for determining identity of a tester which transmitted the received test data frames and identity of a communications port via which the test data frames were transmitted.

According to another aspect of this invention there is provided a tester for testing communication in a network which carries data frames between communications ports having respective addresses, comprising:
a plurality of communications ports;
a test data generator for generating test data frames to be transmitted via the communications ports;
a store for storing a plurality of test modes of the tester; and
a selector for receiving an indication of user selection of one of the test modes, and for selecting in accordance with that indication a respective mode of operation of the communications ports and of the test data generator.

### Brief Description of Drawings

A method and apparatus in accordance with this invention, for testing Ethernet equipment providing tributary links to SONET or SDH transmission systems, will now be described, by way of example, with reference to the accompanying drawings, in which:
- Figure 1: is a schematic block diagram of a SONET/SDH network with tributary data streams from Ethernet local-area networks (LANs);
- Figure 2: is a schematic block diagram of a test set for testing the network shown in Figure 1;
- Figure 3: shows the format of an Ethernet data frame generated by the test set of Figure 2;
- Figure 4: is a schematic diagram of a test set as shown in Figure 2 providing a first, "2-port loopback" mode of testing a network such as that shown in Figure 1;
- Figure 5: is a schematic diagram of two test sets as shown in Figure 2 providing a second, "end-to-end" mode of testing; and
- Figure 6: is a schematic diagram of two test sets as shown in Figure 2 providing a third, "1-port loopback/loop-thru" mode of testing.

### Best Mode for Carrying Out the Invention, & Industrial Applicability

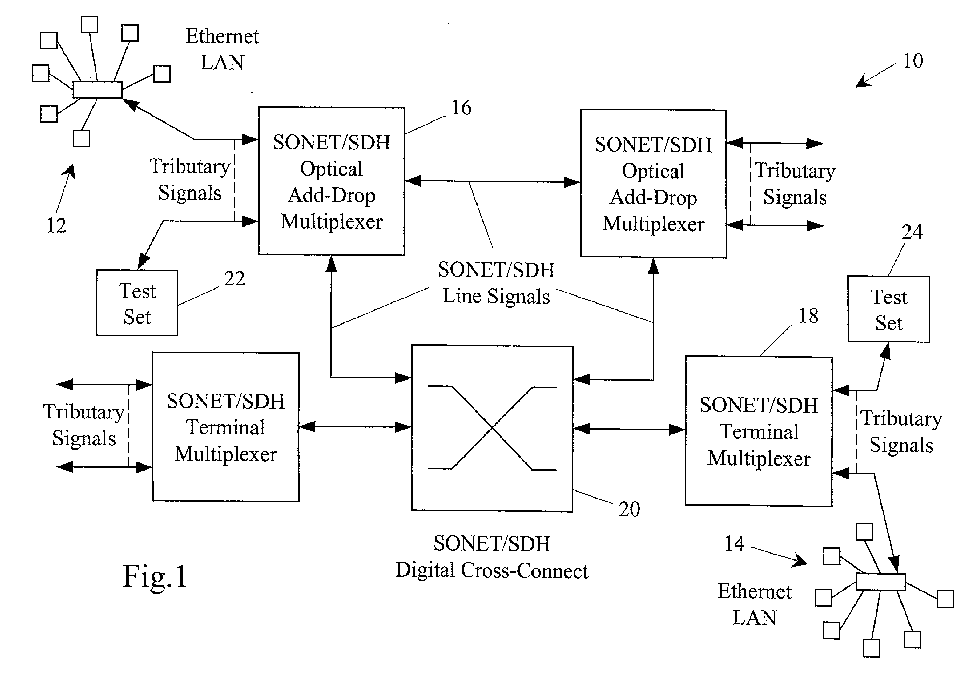

Figure 1 shows an example of a data communications network 10 for transmitting data frames between two Ethernet LANs 12 and 14 via a transmission system 16 which uses SONET or SDH technology. Each Ethernet LAN has multiple stations or nodes (for example, workstations, file servers, print servers, printers and other appliances) connected in a star topology to one or more hubs or Ethernet switches. One of the hubs in each LAN 12 and 14 also has a connection to SONET or SDH access or aggregation equipment such as an optical add-drop multiplexer (OADM) 16 or a terminal multiplexer 18. This equipment receives tributary signals in their native formats (in the present case Ethernet frames) and either creates SONET/SDH frames by combining the tributary signals from multiple sources (terminal multiplexer) or inserts portions of a tributary signal into respective sections of the payload envelope of successive existing frames (add-drop multiplexer). The multiplexers 16 and 18 are interconnected over SONET/SDH links either directly or via digital crossconnect equipment 20. The details of SONET/SDH frame structure and of operation of equipment such as terminal multiplexers, add-drop multiplexers and cross-connects are well know to those skilled in the art and need not be discussed here.

The installation and maintenance of a system such as the network 10 shown in Figure 1 frequently involves the transmission of test signals (Ethernet data frames) over selected paths in the network in order to confirm that the network equipment (links, multiplexers, cross-connects etc.) comprising those paths is operating correctly. For example, a test set 22 connected to the OADM 16 may be used to inject test frames into the network 10 for transmission to another test set 24 connected to the terminal multiplexer 18. However, testing of a system including Ethernet components is complicated by the need to specify one or more port addresses for each Ethernet component. The addressing scheme by which data frames are routed to their intended destination over an Ethernet LAN involves the allocation to each Ethernet interface equipment (plug-in card or integral circuitry) of a globally unique 12-digit (6-byte) hexadecimal station address such as 08:00:07:A9:B2:FC. Thus if a test engineer needs to transmit test data over the path from OADM 16 via the SONET/SDH network 10 to the terminal multiplexer 18, it has previously been necessary for the engineer to specify several such addresses for the test sets 22 and 24 at each end of the path. Given the format of these addresses this is a tedious task which is prone to error. Furthermore, there is no evident association of the addresses with connections between the test sets and the network, and no permanent association of the addresses with specific paths or equipment in the network. Accordingly interpreting the results of tests expressed in terms of Ethernet interface addresses has been difficult and time-consuming, and this significantly complicates and slows the process of analysing the results to determine the cause and location of a network fault.

A predefined set of Ethernet station addresses are permanently stored and used selectively in both the test sets 22 and 24 to determine the destination addresses of Ethernet frames transmitted by the test sets. These station addresses are drawn from those allocated in accordance with Ethernet practice to the manufacturer of the test sets. Typically the set of addresses is the same for all examples of the same test set model, but different for different models. Selection of particular combinations of addresses in each test set is co-ordinated by the test sets in accordance with user selection of one of several predefined test modes, as described below. In addition, to maintain full flexibility of operation the user is able to configure all Ethernet addresses and related parameters individually, to cater for circumstances where the predefined test modes are not appropriate.

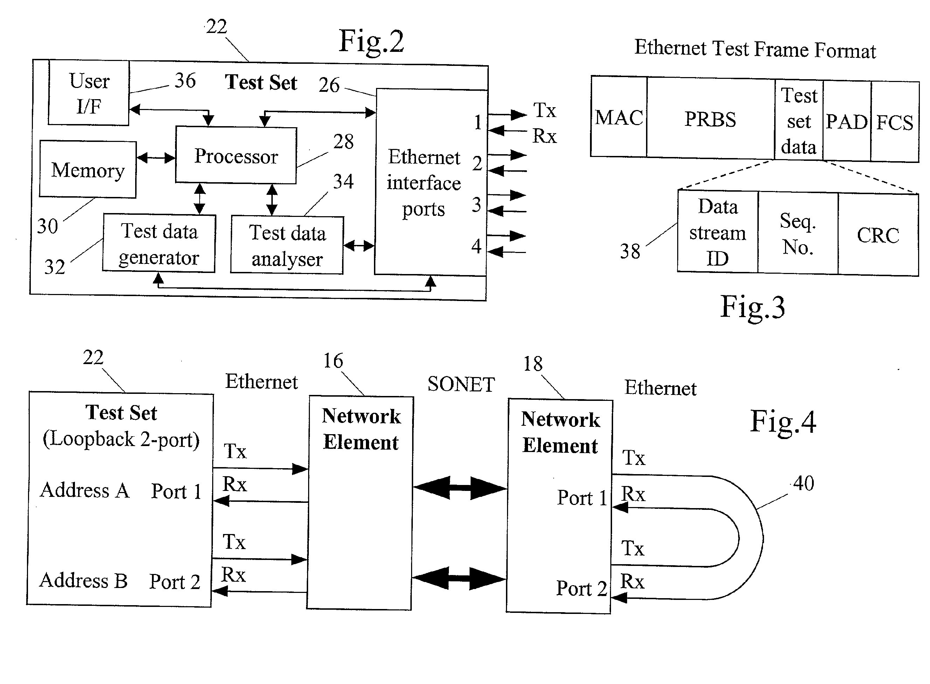

Figure 2 shows, by way of example, the principal functionality of the test set 22 (and 24) for implementing the present invention. Referring to Figure 2, a set of Ethernet interface ports 26 (optical or electrical, 10Mb/s, 100Mb/s, 1Gb/s and/or 10Gb/s) is provided for connection to the network elements of the network 10 such as the OADM 16 and the terminal multiplexer 18. Four interface ports are shown, but a larger number may be provided if desired. Each Ethernet interface port comprises a transmit output Tx (e.g. containing a laser in the case of an optical port) and a receive input Rx (e.g. containing a photodiode receiver). The Ethernet ports 26 are coupled to a processor 28 which co-ordinates operation of the test set 22 in accordance with software program instructions stored in a memory 30. Test data to be transmitted via the Ethernet ports 26 are generated in a test data generator 32, for example using a pseudo-random binary sequence (PRBS) generator, and assembled with appropriate Ethernet MAC headers (described below) and check data to produce Ethernet frames. Likewise test data in Ethernet frames received via the Ethernet ports 26 are extracted by the processor 28 from the frames and supplied to a test data analyser 34 for validation. The functional requirements of the user of the test set and the results of tests performed are communicated via a user interface 36 (e.g. a display and input device such as a keyboard) controlled by the processor 28. The arrangement of functionality as shown in Figure 2 is illustrative only, and the details of practical implementation may vary. For example, most or all of the functionality of the test data analyser 34 may be provided by software algorithms stored in the memory 30 and executed by the processor 28.

The Ethernet frames assembled by the test data generator 32 have a format shown in Figure 3, which in most respects conforms to the format of normal Ethernet frames. Each such frame starts with Media Access Control (MAC) information, such as a preamble, start-of-frame delimiter, destination address, source address and frame length/type indicator. The client data or payload comprises PRBS test data generated by the test data generator 32, followed by three fields of four bytes each of test set data 38. These three fields contain:
- an identifier for the test data stream of which the frame is a part, comprising the physical port number (as distinct from station address) of the Ethernet port which transmitted the frame;
- a sequence number for the frame within that stream; and
- a cyclic redundancy check (CRC) code for the values within the test set data bytes 38. The client data are padded as necessary to the minimum specified length for an Ethernet frame, and followed by a frame check sequence (FCS) comprising a 32-bit CRC code.

The test sets 22 and 24 provide four principal predefined test modes: Loopback (2-port), End-to-end, Loopback (1-port) and Loop-thru. Each test set stores the same overall set of Ethernet addresses which can be selectively allocated to different ones of the interface ports 26 in the test set and selectively included in Ethernet frames transmitted by different ports 26 in that or another test set. For the purposes of this description four of these addresses will be identified as Address A, Address B, Address X and Address Y.

In many test configurations one (originating) test set will be generating and transmitting test data frames which will traverse the network under test to a remote test point. There they are either received and immediately validated in a second test set, or returned by a loop-back cable or a second test set to the originating set for validation. Each test set 22 and 24 can be configured as an originating set (Test Set 1) or a receiving/loop-back set (Test Set 2). When the Test Set 1 configuration is selected, Addresses A and B are associated with the test set's ports 1 and 2; when the Test Set 2 configuration is selected, Addresses X and Y are associated with those ports. The selection of addresses for inclusion as destination address in frames transmitted from each port for each of the predefined test modes is specified in the table below.

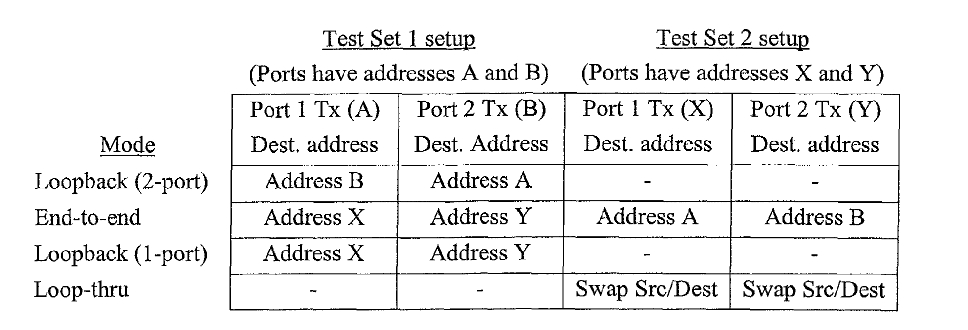

Loopback (2-port) mode. In this mode, shown in Figure 4, only one test set 22 is used and loopback cables 40 connect Ethernet ports 1 and 2 on the remote network element (e.g. terminal multiplexer) 18, so that Ethernet frames received on either port are directed back immediately through the other port. The loopback cables 40 likewise interconnect other pairs of ports on the network element 18, such as port 3 with port 4, and port 5 with port 6. As can be seen from the table above, as a result of the selection of loopback (2-port) mode, the test set 22 transmits from its port 1 Ethernet frames containing Address B as the destination address; likewise it transmits from port 2 frames containing Address A as the destination address. Additional pairs of ports are mutually addressed in the same way, e.g. frames from port 3 contain the address of port 4 as destination, and frames from port 4 contain the address of port 3 as destination. This addressing together with the loopback cables 40 ensure that test frames transmitted by the test set 22 should be received back by it (although on another port), for validation and accumulation of test results.

It can be seen that this test mode requires two Ethernet ports to be provided for testing at the network element 18, and the provision of two duplex links within the SONET/SDH network. In some cases it may also be necessary to invoke the use of Virtual Private Network (VPN) arrangements, to allow the system to accept Ethernet frames from the test set 22 for transport to the network element 18 even though there is no Ethernet receiving node with a relevant destination address coupled to that network element. These requirements can arise with certain Ethernet implementations, as a result of the inherent duplex nature of Ethernet systems, the presence of protocol layer 2 switching, the requirements of auto-negotiation and the use of Ethernet MAC addresses as described above. In some situations compliance with these requirements is undesirable or infeasible, such as where the network resources allocated to a particular path between test end points include only one SONET/SDH duplex link. To cater for these situations another test mode is provided as described below with reference to Loopback (1-port) and Loop-thru.

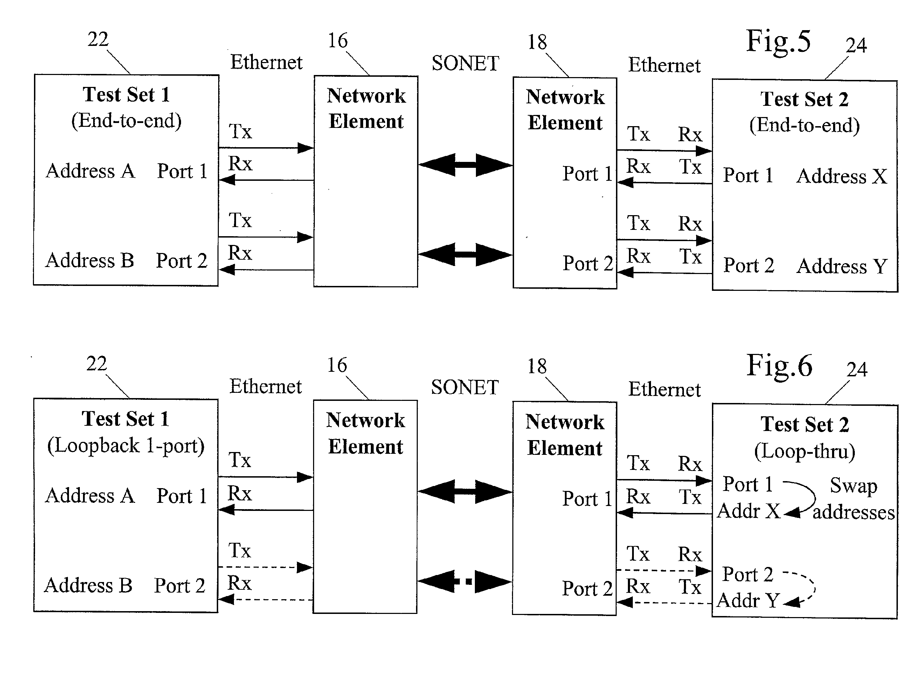

End-to-end mode. In this mode, as shown in Figure 5, two test sets 22 and 24 are used, with the test set 22 configured as Test Set 1 and the test set 24 configured as Test Set 2. The test set 22 transmits from its port 1 Ethernet frames containing Address X of port 1 of the test set 24 as the destination address; likewise it transmits from port 2 frames containing Address Y of port 2 of the test set 24 as the destination address. Complementarily, frames transmitted from ports 1 and 2 of the test set 24 are addressed respectively to Addresses A and B of ports 1 and 2 of the test set 22. Thus the two test sets can exchange Ethernet frames over the network and check them for correct operation of the network.

Loopback 1-port)/Loop-thru modes. These two modes are intended for use together, with a test set that is configured as Test Set 1 (the test set 22 in Figure 6) in Loopback (1-port) mode, and the test set that is configured as Test Set 2 (the test set 24) being in Loop-thru mode. The destination address for Ethernet frames sent from port 1 of the test set 22 is the same as in End-to-End mode, i.e. Address X of port 1 of the test set 24. However, the test set 24 is not arranged for independent generation of its own Ethernet frames. Instead it is arranged to retransmit on the same port the frames it receives, after having exchanged or swapped the source and destination addresses they contain and recalculated and updated each frame's FCS. Thus the frames it receives have Address A as source address and Address X as destination address, and it retransmits these frames with Address X as source address and Address A as destination address. Accordingly the test set 22 receives back on port 1 the frames it has transmitted from that port.

With test sets configured in Loopback (1-port)/Loop-thru modes, a loopback test can be accomplished using just one port on each test set and with a single duplex link in the SONET/SDH network, irrespective of the specific implementation of Ethernet in use (e.g. with auto-negotiation). If desired, additional ports on the test sets 22 and 24 can be used to send additional test frames on a round trip through different paths across the network, for example between the ports 2 of the test sets as indicated in dashed line in Figure 6.

Referring again to Figure 3 and as indicated above, the test set data 38 included in each Ethernet frame generated by the test sets 22 and 24 include an identification of the physical identity of the source Ethernet port which transmitted that frame. The tests sets 22 and 24 are arranged to look for this identifier in each received Ethernet frame, and extract it when it is found. The extracted identifier is used to control the display of test results on the user interface 36 (Figure 2), to provide a more meaningful indication of frame source than is possible with Ethernet addresses alone. Although it is known to extract and display Ethernet source addresses in test equipment, interpretation of this information is not easy. A user is typically required to consult a table associating Ethernet addresses to individual pieces of test equipment and specific Ethernet ports in them in order to make use of displayed source addresses. Given the length and format of such addresses, this is difficult, time-consuming and prone to misreading.

In contrast, the test sets 22 and 24 can extract a more meaningful indication of equipment identity for display on the interface 36. For example, if End-to-End mode is in use, then the test set 22 is set to be Test Set 1. The processor 28 then configures the Ethernet ports 1 and 2 with the Addresses A and B respectively. Frames for transmission from those ports are constructed to have Addresses X and Y as destinations, as described above, and the identities of ports 1 and 2 are included in the data stream identifier of the test set bytes 38.

When the frames are received by the test set 24, the data stream identifiers (port numbers) are extracted by the processor 28 and associated with the source addresses in the frames. This association enables the test set 24 to display the frame source information on its user interface 36 as "Far end port 1" or "Far end port 2" as appropriate. The "Far end" designation can be determined from the presence in the source address fields of the predefined addresses A and B which are known to both test sets although actively in use at the time only in the test set 22. References to the source of frames generated by the test set 24 (with source addresses X and Y) can likewise be displayed as "Near end port 1" or "Near end port 2".

The presence of the data stream identifiers enables a meaningful indication of the frame source information to be provided even if the addressing of the Ethernet test frames has been changed, for example in accordance with a user's specific requirements.

The example above has been described in the context of the use of Ethernet tributary streams, and the conventional terminology such as "data frame" and "station address" has accordingly been used. The invention may also be used in the context of other kinds of packet data networks, and the terminology used herein should therefore be understood to embrace also analogous concepts and features in such other kinds of networks for which alternative terminology is conventionally used (e.g. packets and network addresses instead of frames and station addresses).

## Claims

1. A tester for testing communication in a network which carries data frames between communications ports having respective addresses, comprising:
a plurality of communications ports;
a test data generator for generating test data frames to be transmitted via the communications ports;
a store for storing a plurality of sets of predefined addresses to be associated with the communications ports; and
a selector for receiving an indication of user selection of one of a plurality of test modes of the tester, and for selecting in accordance with that indication a respective one of the sets of predefined addresses for association with the communications ports.

2. A tester according to claim 1, wherein the tester has a plurality of user-selectable operational configurations, and the sets of predefined addresses are also selected in an indication of user selection of an operational configuration.

3. A tester according to claim 2, wherein the association of predefined addresses with the communications ports is as follows:

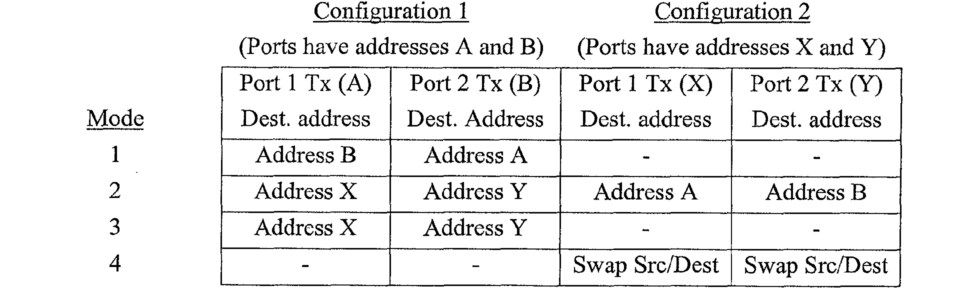

4. A tester for testing communication in a network which carries data frames between communications ports having respective addresses, each frame containing an indication of the addresses of the source and the intended destination of the frame, comprising:
at least one communications port;
a receiver for receiving a data frame arriving at the communications port;
circuitry for exchanging the source and destination addresses contained in the received data frame; and
a transmitter for transmitting the data frame with the exchanged addresses into the network.

5. A tester for testing communication in a network which carries data frames between communications ports having respective addresses, comprising:
a receiver for receiving test data frames transmitted through a network; and
a source identifier for determining identity of a tester which transmitted the received test data frames and identity of a communications port via which the test data frames were transmitted.

6. A tester according to claim 5, wherein the identity of the communications port via which the test data frames were transmitted is determined by reference to data additional to the respective address of the communications port.

7. A tester according to claim 6, including:
a plurality of communications ports; and
a test data generator for generating test data frames to be transmitted via the communications ports, the test data generator being operative to include within each test data frame it generates an indication of the identity of the communications port from which the frame is to be transmitted, distinct from the address of that port.

8. A tester for testing communication in a network which carries data frames between communications ports having respective addresses, comprising:
a plurality of communications ports;
a test data generator for generating test data frames to be transmitted via the communications ports;
a store for storing a plurality of test modes of the tester; and
a selector for receiving an indication of user selection of one of the test modes, and for selecting in accordance with that indication a respective mode of operation of the communications ports and of the test data generator.

9. A tester according to claim 8, wherein the plurality of test modes includes at least two of:
a mode in which test data frames are transmitted from a first communications port of the tester via the network to a second communications port of the tester;
a mode in which test data frames are transmitted from a first communications port of the tester to a respective port of a second tester coupled to the network; and
a mode in which test data frames are transmitted from a first communications port of the tester via the network and a second tester to the first communications port of the tester.
